# EUROPÄISCHE PATENTSCHRIFT

(11) **EP 1 478 687 B1**
(45) Veröffentlichungstag und Bekanntmachung des Hinweises auf die Patenterteilung: **14.04.2010**
(21) Anmeldenummer: 03763636.2
(22) Anmeldetag: 12.06.2003
(51) Int. Cl.: C08J 9/36, B29C 44/56, B32B 5/18

(54) **SCHAUMSTOFF MIT VERDICHTETER OBERFLÄCHE**
SURFACE-COMPACTED FOAM
MOUSSE A SURFACE COMPRIMEE

(30) Priorität: 12.07.2002 DE 10231830
(43) Veröffentlichungstag der Anmeldung: 24.11.2004
(73) Patentinhaber: Evonik Röhm GmbH, 64293 Darmstadt (DE)
(72) Erfinder: LANG, Uwe, 34329 Nieste (DE); GEDULDIG, Roland, 64572 Büttelborn (DE)
(86) Internationale Anmeldenummer: PCT/EP2003/006184
(87) Internationale Veröffentlichungsnummer: WO 2004/007600

(56) Entgegenhaltungen:
- US-A- 5 152 856
- PATENT ABSTRACTS OF JAPAN Bd. 0174, Nr. 93 (M-1475), 7. September 1993 (1993-09-07) & JP 5 124096 A (KANEGAFUCHI CHEM IND CO LTD), 21. Mai 1993 (1993-05-21)
- PATENT ABSTRACTS OF JAPAN Bd. 1999, Nr. 03, 31. März 1999 (1999-03-31) & JP 10 316796 A (SEKISUI CHEM CO LTD), 2. Dezember 1998 (1998-12-02)

## Beschreibung

Die vorliegende Erfindung betrifft ein Verfahren zur Herstellung von Schaumstoffen mit verdichteten Oberflächen, den Schaumstoff mit den verdichteten Oberflächen und die Verwendung des erfindungsgemäßen Schaumstoffs.

### Stand der Technik

DE 19 925 787 beschreibt ein Verfahren zur Herstellung von Lautsprechermembranen durch Laminieren eines Schaumstoffkörpers aus ROHACELL^{®} mit einer Deckschicht. Die Deckschicht dient zur Erhöhung der Festigkeit. Die Laminierung erfolgt in einer Presse bei Temperaturen über 160°C und Drucken > 0,4 Mpa. Über die mechanischen Eigenschaften des Kunststoffschaumstoffformkörpers alleine, ohne die auflaminierte Deckschicht, werden keine Aussagen gemacht.

DE 2 147 528 beschreibt einen Formkörper mit zelligem Querschnitt und einer integralen geschlossenen Haut, der durch Anwendung von Hitze und Druck auf ein Emulsionspolymerisat aus Acryl- und Methacrylsäureestern und Vinylacetat entsteht. Die geschlossene Haut kann auch dekorative Verzierungen tragen.

DE 2 229 465 beschreibt zelluläre Formkörper mit integralen transparenten Fenstern. Ein Emulsionspolymerisat aus Acrylaten und Methacrylaten wird in eine geeignete Form gefüllt und durch Pressen zwischen zwei geheizten Matrizenformen an den gewünschten Stellen zu einem transparenten Kunststoff umgeformt.

In beiden Fällen erhält man glatte, hochglänzende Oberflächen.

EP 272 359 beschreibt ein Verfahren zur Herstellung eines Composit-Körpers, in dem ein Schaumstoffkern aus PVC oder PU laminiert wird und in eine geschlossene Form eingebaut wird, die dem herzustellenden Verbundkörper entspricht. Der Expansionsdruck des Schaums dient zur Herstellung des Verbunds zwischen Schaum und Laminat.

### Aufgabe

Kunststoffschaumkörper aus ROHACELL^{®} sind bekannt und werden von der Röhm GmbH & Co. KG in den Handel gebracht. Sie dienen zur Herstellung von Teilen aus einem Kern aus ROHACELL^{®} und einer Deckschicht. Als Deckschicht kann jedes bekannte flächige Gebilde eingesetzt werden, das bei den zur Herstellung des Endprodukts notwendigen Verarbeitungsparametern, wie Druck und Temperatur, stabil ist. Hierzu gehören u.a. beispielsweise Folien die Polypropylen, Polyester, Polyamid, Polyurethan, Polyvinylchlorid, Polymethyl(meth)acrylat und/oder Metall, wie beispielsweise Aluminium, enthalten. Bevorzugt können des weiteren Matten oder Bahnen verwendet werden, die Glasfasern, Kohlefasern und/oder Aramidfasern umfassen. Als Deckschicht können auch Bahnen eingesetzt werden, die eine mehrschichtigen Aufbau aufweisen.

Bevorzugt können beispielsweise Prepregs eingesetzt werden. Dies sind mit härtbaren Kunststoffen vorimprägnierte Bahnen, meist Glasfasermatten oder Glasfilamentgewebe, die durch Warmpressen zu Formteilen oder Halbzeug verarbeitet werden können. Hierzu gehören u.a. sog. GMT und SMC. In allen Nasslaminierverfahren und -infusionsverfahren wie beispielsweise VARI (vaccum assistal resin infusion), RTM (resin transfer molding), VARTM (Vaccuum-Assisted Resin Transfer Molding), RLI (resin liquid infusion), SCRIMP (Seemann's Composite Resin Infusion Molding Process), DPRTM (Difference Pressure Resin Transfer Molding) oder SLI (Single Line Infusion) benetzt flüssiges Harz die Oberfläche des Schaumstoffkörpers und dringt oberflächlich in die Poren des Schaumstoffkörpers ein und sorgt so für Harzverluste und zusätzliches Gewicht.

Des weiteren sind auch kohlefaserverstärkte Kunststoffe bekannt, die als Deckschichten besonders geeignet sind.

Vorzugsweise liegt die Dicke der Deckschicht im Bereich von 0,05 bis 10 mm, bevorzugt im Bereich von 0,1 bis 5 mm und ganz besonders bevorzugt im Bereich von 0,5 bis 2 mm.

Zur Verbesserung der Haftung kann auch ein Klebstoff eingesetzt werden.

Ein Problem stellt die aufzutragende Klebstoffmenge dar. Die Klebstoffmenge beträgt bei üblichen Anwendungen ca. 500 g/m² Verbundfläche. Für gewichtskritische Anwendungen stellt dies ein Problem dar, da ein Teil des Klebstoffs in die Poren des Schaumstoffs eindringt und nicht mehr für die Ausbildung der Klebschicht zur Verfügung steht.

Gelöst wurde dieses Problem bisher so, dass man in einem Arbeitsschritt vor dem Auftrag des Klebers die Schaumstoffoberfläche mit einer leichten Spachtelmasse glättete.

Dieses Verfahren ist aber nachteilig, da es einen zusätzlichen Arbeitsschritt erfordert.

Es bestand also die Aufgabe, einen Kunststoffschaumkörper zur Verfügung zu stellen, der sich durch eine reduzierte Harzaufnahme bei gleicher Klebekraft auszeichnet oder eine reduzierte Harzaufnahme aufweist, wenn der Schaumkern als "fly-away-tool" eingesetzt wird.

Lösung

Die für das Verfahren der Erfindung relevanten Schaumstoffkörper bestehen aus Poly(meth)acrylimidschaum.

Die Schreibweise (Meth)acryl umfasst Methacryl, Acryl sowie Mischungen aus beiden.

Poly(meth)acrylimidschäume für Kernschichten von Membranen enthalten wiederkehrende Einheiten, die durch Formel (I) darstellbar sind, 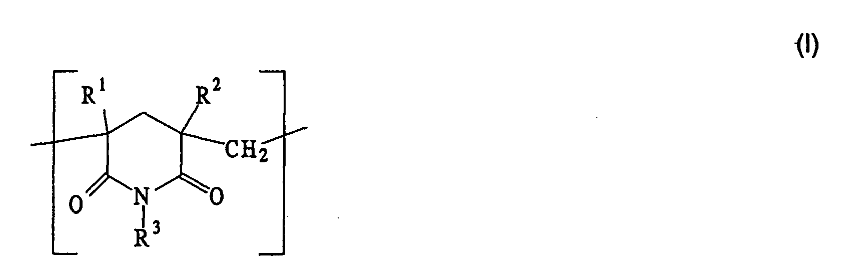 worin
R¹ und R² gleich oder verschieden Wasserstoff oder eine Methylgruppe und
R³ Wasserstoff oder einen Alkyl- oder Arylrest mit bis zu 20 Kohlenstoffatomen, wobei Wasserstoff bevorzugt ist, darstellen.

Vorzugsweise bilden Einheiten der Struktur (I) mehr als 30 Gew.-%, besonders bevorzugt mehr als 50 Gew.-% und ganz besonders bevorzugt mehr als 80 Gew.-% des Poly(meth)acrylimidschaums.

Die Herstellung von erfindungsgemäß einsetzbaren Poly(meth)acrylimid-Hartschaumstoffen ist bekannt und beispielsweise in GB-PS 1 078 425 und 1 045 229, der DE-PS 1 817 156 (= US-PS 3 627 711) oder der DE-PS 27 26 259 (= US-PS 4 139 685) offenbart.

So können sich die Einheiten der Strukturformel (I) unter anderem beim Erhitzen auf 150 bis 250 °C aus benachbarten Einheiten der (Meth)acrylsäure und des (Meth)acrylnitrils durch eine cyclisierende Isomerisierungsreaktion bilden (vgl. DE-C 18 17 156, DE-C 27 26 259, EP-B 146 892). Üblicherweise wird zunächst ein Vorprodukt durch Polymerisation der Monomeren in Gegenwart eines Radikalinitiators bei niedrigen Temperaturen, z. B. 30 bis 60 °C mit Nacherhitzung auf 60 bis 120 °C erzeugt, das dann durch Erhitzen auf ca. 180 bis 250 °C durch ein enthaltenes Treibmittel aufgeschäumt wird (siehe EP-B 356 714).

Hierzu kann beispielsweise zunächst ein Copolymerisat gebildet werden, welches(Meth)acrylsäure und (Meth)acrylnitril vorzugsweise in einem Molverhältnis zwischen 2 : 3 und 3 : 2 aufweist.

Darüber hinaus können diese Copolymerisate weitere Comonomere, wie beispielsweise Ester der Acryl- oder Methacrylsäure, insbesondere mit niedrigen Alkoholen mit 1 - 4 C-Atomen, Styrol, Maleinsäure oder deren Anhydrid, Itakonsäure oder deren Anhydrid, Vinylpyrrolidon, Vinylchlorid oder Vinylidenchlorid verwendet werden. Der Anteil der Comonomeren, die sich nicht oder nur sehr schwer cyclisieren lassen, soll 30 Gew.-%, vorzugsweise 10 Gew.-% nicht übersteigen.

Als weitere Monomere können in ebenfalls bekannter Weise geringe Mengen an Vernetzern, wie z. B. Allylacrylat, Allylmethacrylat, Ethylenglykoldiacrylat oder -dimethacrylat oder mehrwertige Metallsalze der Acryl- oder Methacrylsäure, wie Magnesium-Methacrylat vorteilhaft verwendet werden. Die Mengenanteile können z. B. 0,005 bis 5 Gew.-% betragen.

Des weiteren können die Vorprodukte übliche Zusatzstoffe enthalten. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterrungsschutzmittel und Weichmacher.

Als Polymerisationsinitiatoren werden die an sich für die Polymerisation von Methacrylaten üblichen verwandt, beispielsweise Azoverbindungen, wie Azodüsobutyronitril, sowie Peroxide, wie Dibenzoylperoxid oder Dilauroylperoxid, oder auch andere Peroxidverbindungen, wie beispielsweise t-Butylperoctanoat oder Perketale, wie auch gegebenenfalls Redoxinitiatoren (vgl. hierzu beispielsweise H. Rauch-Puntigam, Th. Völker, Acryl- und Methacrylverbindungen, Springer, Heidelberg, 1967 oder Kirk-Othmer, Encyclopedia of Chemical Technology, Vol. 1, Seiten 286 ff, John Wiley & Sons, New York, 1978). Bevorzugt werden die Polymerisationsinitiatoren in Mengen von 0,01 bis 0,3 Gew.-% bezogen auf die Ausgangsstoffe eingesetzt. Günstig kann es auch sein, Polymerisationsinitiatoren mit unterschiedlichen Zerfallseigenschaften bezüglich Zeit und Temperatur zu kombinieren. Gut geeignet ist z. B. die gleichzeitige Verwendung von tert-Butylperpivalat, tert-Butylperbenzoat und tert-Butylper-2-ethylhexanoat.

Zum Aufschäumen des Copolymerisats während der Umwandlung in ein imidgruppenhaltiges Polymer dienen in bekannter Weise Treibmittel, die bei 150 bis 250 °C durch Zersetzung oder Verdampfung eine Gasphase bilden. Treibmittel mit Amidstruktur, wie Harnstoff, Monomethyl- oder N,N'-Dimethylharnstoff, Formamid oder Monomethylformamid, setzen beim Zerfall Ammoniak oder Amine frei, die zur zusätzlichen Bildung von Imidgruppen beitragen können. Es können jedoch auch stickstofffreie Treibmittel wie Ameisensäure, Wasser oder einwertige aliphatische Alkohole mit 3 bis 8 C-Atomen, wie Propanol, Butanol, Isobutanol, Pentanole oder Hexanol, verwendet werden. Treibmittel werden im Reaktionsansatz üblicherweise in Mengen von ca. 0,5 bis 8 Gew.-% bezogen auf die eingesetzten Monomeren verwendet.

Ein ganz besonders bevorzugter einsetzbarer Polymethacrylimid-Schaumstoff kann beispielsweise durch folgende Schritte erhalten werden:
1. Herstellen einer Polymerisatplatte durch radikalische Polymerisation in Gegenwart von einem oder mehreren Initiatoren sowie ggf. weiteren üblichen Zusatzstoffen, die beispielhaft zuvor aufgeführt wurden, hergestellt wird, bestehend aus
   (a) einer Monomermischung aus 40 - 60 Gew.-% Methacrylnitril, 60 - 40 Gew.-% Methacrylsäure und gegebenenfalls bis 20 Gew.-%, bezogen auf die Summe von Methacrylsäure und Methacrylnitril, weiteren monofunktionellen, vinylisch ungesättigten Monomeren
   (b) 0,5 - 8 Gew.-% eines Treibmittelgemisches aus Formamid oder Monomethylformamid und einem einwertigen aliphatischen Alkohol mit 3 - 8 Kohlenstoffatomen im Molekül
   (c) einem Vernetzersystem, welches besteht aus
      (c.1) 0,005 - 5 Gew.-% einer radikalisch polymerisierbaren vinylisch ungesättigten Verbindung mit mindestens 2 Doppelbindungen im Molekül und
      (c.2) 1-5 Gew.-% Magnesiumoxid gelöst in der Monomermischung
2. Aufschäumen der Platte bei Temperaturen von 200 bis 260 °C zur Polymethacrylimid-Platte und einer anschließenden
3. Wärmebehandeln in zwei Schritten wobei der erste Schritt aus 2-6 Stunden bei 100 - 130 °C und der zweite Schritt aus 32 - 64 Stunden bei 180 - 220 °C besteht.

Polymethacrylimide mit hoher Wärmeformbeständigkeit können des weiteren durch Umsetzung von Polymethylmethacrylat oder dessen Copolymeren mit primären Aminen erhalten werden, die ebenfalls erfindungsgemäß einsetzbar sind. Stellvertretend für die Vielzahl an Beispielen für diese polymeranaloge Imidierung seien genannt: US 4 246 374, EP 216 505 A2, EP 860 821. Hohe Wärmeformbeständigkeit lässt sich hierbei entweder durch Einsatz von Arylaminen (JP 05222119 A2) oder durch die Verwendung von speziellen Comonomeren erreichen (EP 561 230 A2, EP 577 002 A1). All diese Reaktionen ergeben jedoch keine Schäume, sondern feste Polymere, die zum Erhalt eines Schaumes in einem separaten zweiten Schritt aufgeschäumt werden müssen. Auch hierfür sind in der Fachwelt Techniken bekannt.

Poly(meth)acrylimid-Hartschaumstoffe können auch kommerziell erhalten werden, wie beispielsweise ROHACELL^{®} von Röhm GmbH, das in verschiedenen Dichten und Größen lieferbar ist.

Die Dichte des Poly(meth)acrylimidschaumes liegt vor der Verdichtung bevorzugt im Bereich von 20 kg/m³ bis 180 kg/m³, besonders bevorzugt im Bereich von 50 bis 110 kg/m³.

Vor der Verdichtung liegt die Dicke des Schaumstöffkörpers im Bereich von 1 bis 1.000 mm, insbesondere im Bereich von 5 bis 500 und ganz besonders bevorzugt im Bereich von 10 bis 300 mm.

Beim Gegenstand der Erfindung gelingt es, durch Anwendung von Druck und Wärme in einer Presse die Oberfläche des Schaumstoffs zu verdichten.

Dies kann im allgemeinen durch sog. Warmpressverfahren erreicht werden. Diese Verfahren sind in der Fachwelt weithin bekannt, wobei auch spezielle Ausführungsformen, wie beispielsweise Doppelbandpressen, SMC-Pressen und GMT-Pressen von der Erfindung erfasst werden. Vorzugsweise werden bei dem Pressvorgang Abstandshalter, sogenannte Anschläge verwendet. Diese erleichtern die Einstellung eines erwünschten Verdichtungsgrades der Kernschicht, ohne dass hierdurch eine Beschränkung der Erfindung erfolgen soll.

Der in der Presse anzuwendende Druck beträgt ca. 30 % der statischen Druckfestigkeit des Schaumstoffs. Diese Daten sind aus den Datenblättern der entsprechenden ROHACELL^{®}-Typen zugänglich.

Die Temperatur der Presse liegt zwischen 180°C und 240°C. Durch die Dauer des Heizvorgangs kann man den Grad der Oberflächenverdichtung bestimmen.
- Heizt man die Randbereiche des Kunststoffschaumkörpers auf, erhält man eine dünne Verdichtungszone.
- Heizt man den gesamten Kunststoffschaumkörper auf, so erhält man eine vollständige Verdichtung.

In jedem Fall erhält man eine glatte Oberfläche.
Der erforderliche Kleberauftrag sinkt von ca. 500 g/m² auf weniger als 50 g/m².

Durch die Variation des in der Presse anzuwendenden Drucks und der daraus folgenden unterschiedlichen Verdichtung der Oberfläche des Kunststoffschaumkörpers kann die Harzaufnahme in weiten Grenzen eingestellt werden, beispielsweise zwischen 300 g/m² bis 100 g/m².

Der erfindungsgemäße Schaumstoff zeichnet sich durch eine höhere Steifigkeit bei geringem Gewicht, verglichen mit dem unverdichteten Schaumstoff, aus. Darüber hinaus verbessert sich das Impact-Verhalten, d. h. die Oberflächendruckfestigkeit, bestimmt nach DIN 5342, ist im Vergleich zum unverdichteten Schaumstoff größer.

Durch die glatte Oberfläche des erfindungsgemäßen Schaumstoffkärpers ist es erstmals möglich, den erfindungsgemäßen Schaumstoffkörper als verlorenen Kern bei Faserverbundbauteilen zu verwenden.

Bisher war es aufgrund der Porenstruktur der Oberfläche des Schaumstoffs nicht oder nur schwer möglich, den Kern zu entfernen, so dass er oft an Ort und Stelle belassen wurde. Der erfindungsgemäße Schaumstoff ermöglicht nun die Entfernung des Kerns aus dem Innenraum des fertig laminierten Bauteils.

Herstellungsbeispiele

### Beispiel 1

Oberflächenverdichtung von **ROHACELL^{®}** in Presse
1. Presse aufheizen (nahe Schäumtemp.)
2. Schaum kalt einlegen
3. Presse auf Kontaktdruck (0-bis Druck der eine Kaltverdichtung erzeugt, ideal für **ROHACELL^{®}** ca. 30% der Druckfestigkeit) schließen
4. Die kraftgesteuerte Presse verdichtet durch nachregeln des Druckes und somit weiterer Schließen die aufgeheizte Oberfläche. Die kalten inneren Bereiche bleiben formstabil und werden nicht verdichtet.
5. Gewünschte Enddicke (Umformgrad) wird durch eingelegte Abstandshalter vorgegeben
6. Nach erreichen der Enddicke ist die Presse und somit das **ROHACELL^{®}** abzukühlen. Hier ist wichtig, dass der **ROHACELL^{®}** nach der Entnahme dimensionsstabil ist.

### Beispiel 2

Oberflächenverdichtung von **ROHACELL^{®}** durch Nachexpansion in Presse
1. Kalte oder heiße (über Schäumtemp.) Presse mit Abstandshalter und **ROHACELL^{®}** bestücken, wobei beides in etwa gleiche Dicke hat. Der Druck muss so eingestellt werden, dass sich die Presse nicht durch den Gegendruck des nachschäumenden **ROHACELL^{®}** öffnet bzw. die Lage der Abstandshalter verändert wird.
2. Sollte der Prozess mit einer anfänglich kalten Presse laufen, ist diese jetzt auf über Schäumtemp. aufzuheizen.
3. Ist gewünschte Oberflächenverdichtung durch Nachexpansion erreicht, muss die Presse im geschlossen Zustand abgekühlt werden. Hier ist wichtig, dass der **ROHACELL^{®}** nach der Entnahme dimensionsstabil ist.

### Beispiel 3

Oberflächenverdichtung von **ROHACELL^{®}** durch Nachexpansion in Werkzeugen
1. Kaltes oder heißes (über Schäumtemp.) Werkzeug mit **ROHACELL^{®}** bestücken, wobei die Dicke in etwa die der Kavität entspricht.
2. Werkzeug schließen und wenn kaltes genutzt jetzt über Schäumtemp. aufheizen.
3. Ist gewünschte Oberflächenverdichtung durch Nachexpansion erreicht, muss das Werkzeug im geschlossen Zustand abgekühlt werden. Hier ist wichtig, dass der **ROHACELL^{®}** nach der Entnahme dimensionsstabil ist.

### Beispiel 4

Kontinuierliche Oberflächenverdichtung von **ROHACELL^{®}**
1. **ROHACELL^{®}** wird mit geeignetem Heizmittel (Heizplatten, Strahler, Mirkowelle, Heißluft, heiße Rollen o.ä.) kontinuierlich (nahe der Schäumtemp.) erwärmt.
2. Nachgeschaltet wird das **ROHACELL^{®}** durch Druck auf die Oberfläche (kalte Walzen, Rollen o.ä.) oberflächenverdichtet. Gleichzeitig oder nachgeschaltet muss das **ROHACELL^{®}** soweit abgekühlt werden bis die Dimensionsstabilität erreicht ist.

## Patentansprüche

1. Verfahren zur Herstellung eines oberflächlich verdichteten Schaumstoffes,
**dadurch gekennzeichnet,**
**dass** er durch Erhitzen und Druckanwendung aus einem handelsüblichen homogenen Schaumstoff-Kunststoffformkörper aus Poly(meth)acrytimid-Schaumstoff erhalten wird.

2. Verfahren nach Anspruch 1, **dadurch gekennzeichnet, dass** die Umformtemperatur zwischen 170°C und 250°C liegt.

3. Verfahren nach Anspruch 1, **dadurch gekennzeichnet, dass** die Umformtemperatur zwischen 200°C und 240°C liegt.

4. Verfahren nach Anspruch 1, **dadurch gekennzeichnet, dass** die Umformtemperatur zwischen 180°C und 200°C liegt,

5. Verfahren nach Anspruch 1, **dadurch gekennzeichnet, dass** der Druck beim Umformen zwischen 0,1 MPa und 16 MPa liegt.

6. Verfahren nach Anspruch 1, **dadurch gekennzeichnet, dass** der Druck beim Umformen zwischen 0,1 MPa und 1 MPa liegt.

7. Verfahren nach Anspruch 1, **dadurch gekennzeichnet, dass** der Druck beim Umformen zwischen 1 MPa und 7 MPa liegt.

8. Oberflächlich verdichteter Schaumstoffformkörper, erhältlich nach einem Verfahren der Ansprüche 1- 4, **dadurch gekennzeichnet, dass** die Harzaufnahme weniger als 500 g/cm² beträgt und dass die Oberflächendruckfestigkeit, gemessen nach DIN 5342 mindestens 0,4 MPa beträgt.

9. Verwendung des oberflächlich verdichteten Schaumstoffkörpers nach Anspruch 8 als verlorener Kern in einer Sandwichkonstruktion.

10. Verwendung des oberflächlich verdichteten Schaumstoffkörpers nach Anspruch 8 zur Herstellung von Wasser-, Land-, Luft- und Raumfahrzeugen.

11. Wasser-, Land-, Luft- und Raumfahrzeuge, **dadurch gekennzeichnet, dass** es unter Verwendung eines oberflächlich verdichteten Schaumstoffkörpers nach Anspruch 8 hergestellt wird.

12. Verwendung des oberflächlich verdichteten Schaumstoffkörpers nach Anspruch 8 zur Herstellung von Teilen von Wasser-, Land-, Luft- und Raumfahrzeugen.

13. Teile für die Herstellung von Wasser-, Land-. Luft- und Raumfahrzeugen, **dadurch gekennzeichnet, dass** diese aus dem Schaumstoff nach Anspruch 8 hergestellt sind.

14. Verwendung des oberflächlich verdichteten Schaumstoffkörpers nach Anspruch 8 zur Herstellung von Sandwichstrukturen im Maschinenbau.

15. Verwendung des oberflächlich verdichteten Schaumstoffkörpers nach Anspruch 8 zur Herstellung von Sandwichstrukturen im Sportgerätebau.

## Claims

1. Process for producing a surface-compacted foam,
**characterized in that**
the foam is obtained by heating and applying pressure from a commercially available homogeneous synthetic polymer foam moulding composed of poly(meth)acrylimide foam.

2. Process according to Claim 1, **characterized in that** the forming temperature is from 170°C to 250°C.

3. Process according to Claim 1, **characterized in that** the forming temperature is from 200°C to 240°C.

4. Process according to Claim 1, **characterized in that** the forming temperature is from 180°C to 200°C.

5. Process according to Claim 1, **characterized in that** the pressure during the forming process is from 0.1 MPa to 16 MPa.

6. Process according to Claim 1, **characterized in that** the pressure during the forming process is from 0.1 MPa to 1 MPa.

7. Process according to Claim 1, **characterized in that** the pressure during the forming process is from 1 MPa to 7 MPa.

8. Surface-compacted foam moulding, obtainable by a process of Claims 1 to 4, **characterized in that** resin absorption is less than 500 g/cm², and **in that** the surface compressive strength, measured to DIN 5342, is at least 0.4 MPa.

9. Use of the surface-compacted foam body according to Claim 8 as a removable core in a sandwich structure.

10. Use of the surface-compacted foam body according to Claim 8 for producing vehicles for use on water, on land, in the air or in space.

11. Vehicles for use on water, on land, in the air or in space, **characterized in that** they are produced using a surface-compacted foam body according to Claim 8.

12. Use of the surface-compacted foam body according to Claim 8 for producing parts of vehicles for use on water, on land, in the air or in space.

13. Parts for the production of vehicles for use on water, on land, in the air or in space, **characterized in that** these have been produced from the foam according to Claim 8.

14. Use of the surface-compacted foam body according to Claim 8 for producing sandwich structures in mechanical engineering.

15. Use of the surface-compacted foam body according to Claim 8 for producing sandwich structures in the construction of sports equipment.

## Revendications

1. Procédé pour la production d'une mousse à surface comprimée, **caractérisé en ce qu'**elle est obtenue par chauffage et application d'une pression à partir d'un corps moulé en matière plastique alvéolaire homogène à base de mousse de poly(méth)acrylimide.

2. Procédé selon la revendication 1, **caractérisé en ce que** la température de transformation est comprise entre 170 °C et 250 °C.

3. Procédé selon la revendication 1, **caractérisé en ce que** la température de transformation est comprise entre 200 °C et 240 °C.

4. Procédé selon la revendication 1, **caractérisé en ce que** la température de transformation est comprise entre 180 °C et 200 °C.

5. Procédé selon la revendication 1, **caractérisé en ce que** la pression lors de la transformation est comprise entre 0,1 MPa et 16 MPa.

6. Procédé selon la revendication 1, **caractérisé en ce que** la pression lors de la transformation est comprise entre 0,1 MPa et 1 MPa.

7. Procédé selon la revendication 1, **caractérisé en ce que** la pression lors de la transformation est comprise entre 1 MPa et 7 MPa.

8. Corps moulé en mousse à surface comprimée, pouvant être obtenu selon un procédé des revendications 1 à 4, **caractérisé en ce que** l'absorption de résine est inférieure à 500 g/cm² et **en ce que** la résistance à la pression de la surface, mesurée selon DIN 5342, est d'au moins 0,4 MPa.

9. Utilisation du corps en mousse à surface comprimée selon la revendication 8, en tant que noyau perdu dans une construction en sandwich.

10. Utilisation du corps en mousse à surface comprimée selon la revendication 8, pour la production de bateaux, de véhicules terrestres, d'aéronefs et d'engins spatiaux.

11. Bateaux, véhicules terrestres, aéronefs et engins spatiaux, **caractérisés en ce qu'**ils sont produits avec utilisation d'un corps en mousse à surface comprimée selon la revendication 8.

12. Utilisation du corps en mousse à surface comprimée selon la revendication 8, pour la fabrication de pièces de bateaux, de véhicules terrestres, d'aéronefs et d'engins spatiaux.

13. Pièces pour la production de bateaux, de véhicules terrestres, d'aéronefs et d'engins spatiaux, **caractérisées en ce qu'**elles sont fabriquées à partir de la mousse selon la revendication 8.

14. Utilisation du corps en mousse à surface comprimée selon la revendication 8, pour la fabrication de structures en sandwich dans la construction de machines.

15. Utilisation du corps en mousse à surface comprimée selon la revendication 8, pour la production de structures en sandwich dans la construction d'appareils de sport.
